(19) Europäisches Patentamt
European Patent Office
Office européen des brevets

(11) EP 4 617 321 A1

(12) EUROPEAN PATENT APPLICATION
published in accordance with Art. 153(4) EPC

(43) Date of publication:
**17.09.2025 Bulletin 2025/38**

(21) Application number: **23888589.1**

(22) Date of filing: **01.11.2023**

(51) International Patent Classification (IPC):
***C08L 83/08*** *(2006.01)* ***C08K 5/00*** *(2006.01)*
***C08L 83/12*** *(2006.01)* ***C09D 7/65*** *(2018.01)*
***C09D 201/00*** *(2006.01)*

(52) Cooperative Patent Classification (CPC):
**C08K 5/00; C08L 83/08; C08L 83/12; C09D 7/65; C09D 201/00**

(86) International application number:
**PCT/JP2023/039433**

(87) International publication number:
**WO 2024/101241 (16.05.2024 Gazette 2024/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.11.2022 JP 2022181162**

(71) Applicant: **SHIN-ETSU CHEMICAL CO., LTD.**
**Tokyo 1000005 (JP)**

(72) Inventor: **HAMAJIMA, Yuta**
**Annaka-shi, Gunma 379-0224 (JP)**

(74) Representative: **Mewburn Ellis LLP**
**Aurora Building**
**Counterslip**
**Bristol BS1 6BX (GB)**

(54) **AMINO-MODIFIED SILICONE EMULSION, PAINT ADDITIVE, AND PAINT**

(57) This amino-modified silicone emulsion composition comprises:
100 parts by mass of (A) an amino-modified silicone having a viscosity of 3,000-150,000 mPa·s at 25°C and an amino group equivalent of 5,000-30,000 g/mol;
0.5-15 parts by mass of (B) a polyether-modified silicone having a viscosity of 10-25,000 mPa·s at 25°C;
1.0-15 parts by mass of (C) an organic solvent having an SP value of 10.0-16.0;
3-50 parts by mass of (D) a surfactant; and
10-2,000 parts by mass of (E) water.
This composition can be applied to an aqueous resin, and has suppressed cissing, favorable appearance after coating, and excellent stability when blended into paint.

EP 4 617 321 A1

## Description

### TECHNICAL FIELD

The present invention relates to an amino-modified silicone emulsion, a paint additive, and a paint.

### BACKGROUND ART

Paint coatings are used to enhance appearance, provide a glossy finish, and prevent staining in various applications, including furniture, electrical appliances, automobiles, trains, and other transportation systems, as well as various everyday items. Paints contain paint additives, such as leveling agents and anti-foaming agents, to maintain the appearance after coating. The composition (Patent Document 1) including an additive containing fluorine in its molecule is commonly known as a paint with good leveling properties and high stain resistance. However, the materials are expensive and fluorine-free additives are needed due to environmental concerns.

Polyether-modified silicone is widely used as a fluorine-free paint additive for the purpose of, for example, surface leveling and anti-foaming properties (Patent Documents 2 and 3). The paint industry has recently been shifting from solvent-based resins to water-soluble resins and water-dispersible resins for environmental reasons. However, water-based resins are more prone to cissing and pinhole formation in appearance than solvent-based resins. If paint additives are less compatible with resin components in paints, cissing occurs during coating, resulting in appearance defects. The use of silicone components having high compatibility with resin components in paints to prevent cissing may increase the reactivity with resins to reduce the stability of the paints.

### PRIOR ART DOCUMENTS

### PATENT DOCUMENTS

| | |
|---|---|
| Patent Document 1: | JP-A 2018-070683 |
| Patent Document 2: | JP-A 2013-166830 |
| Patent Document 3: | JP-A 2021-080333 |

### SUMMARY OF INVENTION

### TECHNICAL PROBLEM

To solve the above-described problems in the related art, the present invention is directed to an amino-modified silicone emulsion that can be applied to a water-based resin, is unlikely to cause cissing, provides a good appearance after coating, and exhibits high stability when blended into paints, and to an paint additive and a paint.

### SOLUTION TO PROBLEM

The inventors of the present invention have carried out intensive studies to achieve the above-mentioned object and as a result, have found that an amino-modified silicone emulsion composition containing the following components (A) to (E) can solve the above-mentioned problems, completing the present invention.

The present invention thus provides the following inventions.

1. An amino-modified silicone emulsion composition comprising:

   (A) 100 parts by weight of an amino-modified silicone having a viscosity at 25°C of 3,000 to 150,000 mPa·s and an amino group equivalent of 5,000 to 30,000 g/mol and represented by average compositional formula (I) below,

[Chem. 1]

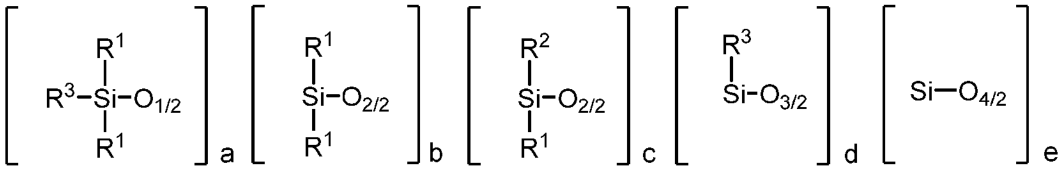

(I)

[wherein $R^1$ is each independently a $C_1$-$C_{20}$ unsubstituted monovalent hydrocarbon group, $R^2$ is each independently a group represented by general formula (1),

$$-R^4-(NH-R^5)_p-NH_2 \qquad (1)$$

($R^4$ and $R^5$ are each independently a $C_1$-$C_6$ divalent organic group, and p is 0 or 1.)
$R^3$ is each independently a group selected from $R^1$, $R^2$, -OH, $-OCH_3$, and $-OC_2H_5$, and a, b, c, d, and e are numbers that satisfy ranges of $2 \leq a \leq 10$, $100 \leq b \leq 2{,}000$, $0 \leq c \leq 50$, $0 \leq d \leq 5$, and $0 \leq e \leq 5$. If c = 0, $R^3$ is $R^2$];

(B) 0.5 to 15.0 parts by weight of a polyether-modified silicone having a viscosity at 25°C of 10 to 25,000 mPa·s and represented by average compositional formula (II) below,

[Chem. 2]

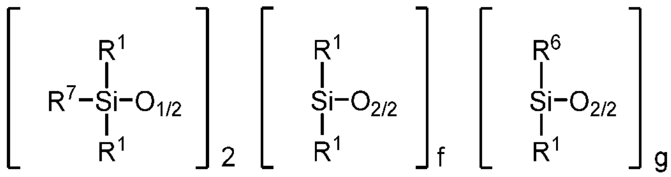

(II)

[wherein $R^1$ is each independently a $C_1$-$C_{20}$ unsubstituted monovalent hydrocarbon group, $R^6$ is each independently a monovalent organic group represented by general formula (3),

$$-C_hH_{2h}O(C_2H_4O)_i(C_3H_6O)_jR^8 \qquad (3)$$

$R^7$ is a group selected from $R^1$, $R^6$, -OH, $-OCH_3$, and $-OC_2H_5$, $R^8$ is a group selected from a hydrogen atom, a $C_1$-$C_6$ alkyl group, and an acetyl group, h is an integer of 1 to 5, i is a number of 5 to 50, j is a number of 0 to 40. f and g satisfy $0 \leq f \leq 200$ and $0 \leq g \leq 30$. If g = 0, $R^7$ is $R^6$];
(C) 1 to 15 parts by weight of an organic solvent having an SP value of 10.0 to 16.0;
(D) 3 to 50 parts by weight of a surfactant; and
(E) 10 to 2,000 parts by weight of water.

2. The amino-modified silicone emulsion composition according to 1, further comprising (F) 0.05 to 5 parts by weight of an organic acid.
3. The amino-modified silicone emulsion composition according to 1 or 2, wherein emulsion particles have an average particle size of up to 450 nm.
4. The amino-modified silicone emulsion composition according to any one of 1 to 3, wherein the amino-modified silicone emulsion composition satisfies a [(Bw) + (Dw)]/(Aw) of 0.05 to 0.25, where (Aw) is an amount of the amino-modified silicone (A), (Bw) is an amount of the polyether-modified silicone (B), and (Dw) is an amount of the surfactant (D).
5. The amino-modified silicone emulsion composition according to any one of 1 to 4, wherein the amino-modified silicone emulsion composition satisfies a (Aae)/[(Bw) + (Dw)] of at least 1,000, where (Aae) is an amino group equivalent of the amino-modified silicone (A), (Bw) is an amount of the polyether-modified silicone (B), and (Dw) is an amount of the surfactant (D).
6. The amino-modified silicone emulsion composition according to any one of 1 to 5, wherein the amino-modified silicone emulsion composition has a pH of 3.5 to 7.5 at 25°C.
7. A paint additive comprising the amino-modified silicone emulsion according to any one of 1 to 6.

8. A paint comprising the amino-modified silicone emulsion according to any one of 1 to 6.

ADVANTAGEOUS EFFECTS OF INVENTION

The amino-modified silicone emulsion composition of the present invention is unlikely to cause cissing after coating, provides a good appearance after coating, and exhibits high stability when blended into paints, and is thus suitably used as a water-based paint additive or blended into paints.

DESCRIPTION OF EMBODIMENTS

The present invention will be described below in detail. Hereinafter, "amino-modified silicone emulsion composition" may be referred to simply as a "composition".

[Component (A)]

Component (A) of the present invention is an amino-modified silicone having a viscosity at 25°C of 3,000 to 150,000 mPa·s and an amino group equivalent of 5,000 to 30,000 g/mol and represented by average compositional formula (I) below,

[Chem. 3]

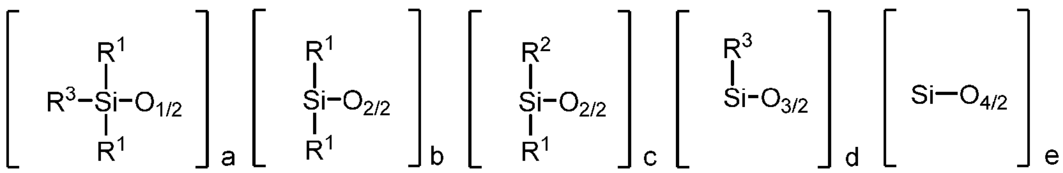

(I)

[wherein $R^1$ is each independently a $C_1$-$C_{20}$ unsubstituted monovalent hydrocarbon group, $R^2$ is each independently a group represented by general formula (1),

$$-R^4-(NH-R^5)_p-NH_2 \qquad (1)$$

($R^4$ and $R^5$ are each independently a $C_1$-$C_6$ divalent organic group, and p is 0 or 1.)
$R^3$ is each independently a group selected from $R^1$, $R^2$, -OH, $-OCH_3$, and $-OC_2H_5$, and
a, b, c, d, and e are numbers that satisfy the ranges of $2 \leq a \leq 10$, $100 \leq b \leq 2{,}000$, $0 \leq c \leq 50$, $0 \leq d \leq 5$, and $0 \leq e \leq 5$. If c = 0, $R^3$ is $R^2$].
Component (A) can be used alone or in combination of two or more.

$R^1$ is each independently a $C_1$-$C_{20}$ unsubstituted monovalent hydrocarbon group. Examples of $R^1$ include alkyl groups, such as methyl, ethyl, propyl, isopropyl, butyl, t-butyl, hexyl, cyclohexyl, heptyl, octyl, nonyl, decyl, tetradecyl, and octadecyl groups; alkenyl groups, such as vinyl, allyl, 5-hexenyl, and oleyl groups; and aryl groups, such as phenyl, tolyl, and naphthyl groups. Of these, a methyl group, long-chain ($C_6$-$C_{20}$) alkyl groups, and a phenyl group are preferred, and a methyl group and a phenyl group are more preferred.

$R^2$ is each independently a group represented by general formula (1),

$$-R^4-(NH-R^5)_p-NH_2 \qquad (1)$$

($R^4$ and $R^5$ are each independently a $C_1$-$C_6$ divalent organic group, and p is 0 or 1). Examples of the $C_1$-$C_6$ divalent organic group include divalent hydrocarbon groups, such as alkylene groups, alkenylene groups, and arylene groups. Examples of the group represented by general formula (1) include a 2-aminoethyl group, a 3-aminopropyl group, a 6-aminohexyl group, an N-(2-aminoethyl)-3-aminopropyl group, an N-(3-aminopropyl)-3-aminopropyl group, and an N-(2-aminoethyl)-6-aminohexyl group. Of these, a 3-aminopropyl group or an N-(2-aminoethyl)-3-aminopropyl group is preferred in terms of availability of raw materials and other reasons.

$R^3$ is each independently a group selected from $R^1$, $R^2$, -OH, $-OCH_3$, and $-OC_2H_5$, and if c = 0, $R^3$ is $R^2$.

a satisfies $2 \leq a \leq 10$, preferably satisfies $2 \leq a \leq 5$, more preferably satisfies a = 2. If a exceeds 10, the amino-modified silicone has an excessively low viscosity, resulting in low emulsifiability.

b satisfies $100 \leq b \leq 2,000$, preferably satisfies $300 \leq b \leq 1,800$, more preferably satisfies $500 \leq b \leq 1,600$. If b is less than 100, a paint additive containing the composition provides a low gloss after coating. If b exceeds 2,000, the amino-modified silicone has an excessively high viscosity, resulting in low emulsifiability.

c satisfies $0 \leq c \leq 50$, preferably satisfies $1 \leq c \leq 30$, more preferably satisfies $1 \leq c \leq 20$, even more preferably satisfies $2 \leq c \leq 10$. If c is less than 1, the amino-modified silicone has an excessively low amino group content and thus has low compatibility with resin components in paints. If $R^3 = R^2$, c may be less than 1 or may satisfy c = 0. If c exceeds 50, the amino-modified silicone has an excessively high amino group content and thus has low stability when mixed with paints.

d satisfies $0 \leq d \leq 5$, preferably satisfies d = 0. If d exceeds 5, the amino-modified silicone has an excessively low viscosity, resulting in poor emulsifiability.

e satisfies $0 \leq e \leq 5$, preferably satisfies e = 0. If e exceeds 5, the amino-modified silicone has an excessively low viscosity, resulting in poor emulsifiability.

Component (A) has a viscosity at 25°C of 3,000 to 150,000 mPa·s, preferably 5,000 to 120,000 mPa·s, more preferably 6,000 to 110,000 mPa·s, even more preferably 10,000 to 100,000 mPa·s. If the viscosity is less than the lower limit mentioned above, a paint additive containing the composition provides a low gloss after coating. When the viscosity is at least 6,000 mPa·s, cissing is unlikely occur after coating. If the viscosity exceeds the upper limit mentioned above, poor emulsifiability results. In the present invention, the viscosity is measured at 25°C by using a BM-type viscometer (e.g., available from Tokyo Keiki Inc). The rotor, the rotational speed, and the rotation time are appropriately selected based on the viscosity in accordance with a standard method.

Component (A) preferably has an amino group equivalent of 5,000 to 30,000 g/mol, preferably 7,000 to 27,000 g/mol, more preferably 8,000 to 25,000 g/mol. If the amino group equivalent is less than the lower limit mentioned above, an excessively high amino group content leads to low stability during mixing with paints. If the amino group equivalent exceeds the upper limit mentioned above, an excessively low amino group content leads to hydrophilicity insufficient for the amino-modified silicone, resulting in poor emulsifiability. The amino group equivalent in the present invention is the number of grams of the target amino-modified silicone that can be neutralized with 1 mole of hydrochloric acid, and is theoretically the molecular weight/the number of nitrogen atoms. The amino group equivalent can be measured by the neutralization titration method using, for example, an automatic titrator available from HIRANUMA Co., Ltd. More specifically, the amino group equivalent can be measured by the following method. The target amino-modified silicone is dissolved in a solvent mixture of toluene and IPA at a weight ratio of 1:1, and the amino group equivalent is measured by titrating the resulting solution with hydrochloric acid using an automatic titrator until the endpoint at pH = 7. The amino group equivalent is calculated as the molecular weight of silicone per mole of amino groups using the following formula.

$$\text{Amino group equivalent (g/mol)} = \{[\text{sample weight (g)}] \times 1,000)\}/\{[\text{normality of hydrochloric acid (N)}] \times [\text{titration volume of hydrochloric acid (mL)}] \times [\text{titer of hydrochloric acid (F)}]\}$$

Amino-modified silicone (A) can be easily obtained by a known synthetic method. For example, as described in Examples in International Publication WO 2021/1320571, amino-modified silicone (A) is obtained by subjecting the following substances to an equilibrium reaction in the presence of a catalyst, such as an alkali metal hydroxide or tetramethylammonium hydroxide: a cyclic siloxane, such as octamethylcyclotetrasiloxane; 3-aminopropyldiethoxymethylsilane, N-(2-aminoethyl)-3-aminopropyldimethoxymethylsilane, or their hydrolysate; and another raw material, such as a compound selected from, for example, hexamethyldisiloxane and dimethyl silicone represented by formula (2) below.

[Chem. 4]

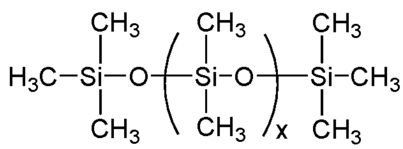

(2)

(wherein x is from 1 to 100).

x is from 1 to 100, preferably from 3 to 50, more preferably from 3 to 20.

[Component (B)]

Component (B) of the present invention is a polyether-modified silicone having a viscosity at 25°C of 10 to 25,000 mPa·s and represented by average compositional formula (II) below,

[Chem. 5]

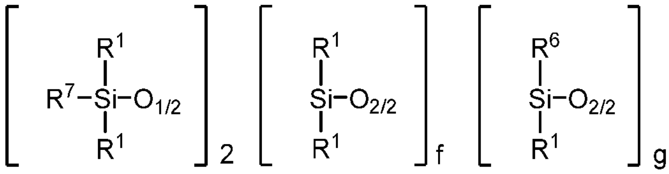

(II)

[wherein $R^1$ is each independently a $C_1$-$C_{20}$ unsubstituted monovalent hydrocarbon group, $R^6$ is each independently a monovalent organic group represented by general formula (3),

$$-C_hH_{2h}O(C_2H_4O)_i(C_3H_6O)_jR^8 \qquad (3)$$

$R^7$ is a group selected from $R^1$, $R^6$, -OH, $-OCH_3$, and $-OC_2H_5$, $R^8$ is a group selected from a hydrogen atom, a $C_1$-$C_6$ alkyl group, and an acetyl group, h is an integer of 1 to 5, i is a number of 5 to 50, j is a number of 0 to 40. f and g satisfy $0 \leq f \leq 200$ and $0 \leq g \leq 30$. If g = 0, $R^7$is $R^6$].

Component (B) can be used alone or in combination of two or more.

$R^1$ is each independently a $C_1$-$C_{20}$ unsubstituted monovalent hydrocarbon group. Examples of $R^1$ include alkyl groups, such as methyl, ethyl, propyl, isopropyl, butyl, t-butyl, hexyl, cyclohexyl, heptyl, octyl, nonyl, decyl, tetradecyl, and octadecyl groups; alkenyl groups, such as vinyl, allyl, 5-hexenyl, and oleyl groups; and aryl groups, such as phenyl, tolyl, and naphthyl groups. Of these, a methyl group, long-chain ($C_6$-$C_{20}$) alkyl groups, and a phenyl group are preferred, and a methyl group and a phenyl group are more preferred.

$R^6$ is each independently a monovalent organic group represented by general formula (3),

$$-C_hH_{2h}O(C_2H_4O)_i(C_3H_6O)_jR^8 \qquad (3).$$

$R^8$ is a group selected from a hydrogen atom, $C_1$-$C_6$ alkyl groups, and an acetyl group. Specific examples of $R^8$ include a hydrogen atom, alkyl groups, such as methyl, ethyl, propyl, butyl, and pentyl groups, and an acetyl group. h is an integer of 1 to 5, preferably from 2 to 4, and i is an integer of 5 to 50, preferably from 5 to 35, more preferably from 5 to 30. j/i for component (B) is preferably from 0 to 2.0, more preferably from 0.05 to 1.5, even more preferably from 0.25 to 1.3, particularly preferably from 0.50 to 1.2.

The HLB value for component (B) is preferably from 3 to 15, more preferably from 4 to 13, even more preferably from 4.5 to 10. The HLB value in the present invention is calculated by the Griffin method.

$R^7$ is each independently a group selected from $R^1$, $R^6$, -OH, $-OCH_3$, and $-OC_2H_5$, and if g = 0, $R^7$ is $R^6$.

f satisfies $0 \leq f \leq 200$, preferably satisfies $0 \leq f \leq 100$, more preferably satisfies $0 \leq f \leq 70$. g satisfies $0 \leq g \leq 30$, preferably satisfies $0 \leq g \leq 20$, more preferably satisfies $0 \leq g \leq 10$. If g = 0, $R^7$ is $R^6$.

Component (B) has a viscosity at 25°C of 10 to 25,000 mPa·s, preferably 100 to 20,000 mPa·s, more preferably 200 to 10,000 mPa·s.

The amount of component (B) is 0.1 to 15.0 parts by weight, preferably 0.2 to 10 parts by weight, more preferably 0.4 to 5.0 parts by weight, even more preferably 0.6 to 4.0 parts by weight per 100 parts by weight of component (A). If the amount of component (B) is too low, cissing tends to occur after coating. If the amount of component (B) is too high, the composition exhibits low stability when blended into paints.

[Component (C)]

Component (C) of the present invention is an organic solvent having an SP value of 10.0 to 16.0 and can be used alone or in combination of two or more. The SP value is a solubility parameter, also expressed as a solubility coefficient, and is a characteristic value proposed by Hildebrand as a measure of the miscibility between liquids. Examples of such organic solvents include alcohol compounds, ketone compounds, ester compounds, ether compounds, and glycol compounds.

Specific examples include cellosolve, propyl cellosolve, butyl cellosolve, propylene glycol monomethyl ether, propylene glycol monobutyl ether, dipropylene glycol monomethyl ether, methyl carbitol, carbitol, propyl carbitol, butyl carbitol, cellosolve acetate, butyl cellosolve acetate, propylene glycol monomethyl ether acetate, 2,2,4-trimethyl-1,3-pentanediol monoisobutyrate, ethylene glycol, propylene glycol, and 1,3-butylene glycol. Of these, propylene glycol monomethyl ether, ethylene glycol, and 1,3-butylene glycol are preferred.

Component (C) preferably has an SP value of 11.0 to 15.5, more preferably 12.0 to 15.0. If the SP value is smaller than 10.0 or larger than 16.0, the emulsion is difficult to prepare, or the emulsion exhibits low stability upon emulsification, resulting in poor appearance and stability when the emulsion is blended into paints.

The amount of component (C) is 1 to 15 parts by weight, preferably 1.0 to 15 parts by weight, more preferably 1.5 to 12 parts by weight, even more preferably 2.0 to 10 parts by weight per 100 parts by weight of component (A). If the amount of component (C) is too low, the composition exhibits low compatibility with resin components in paints, and appearance defects tend to occur after coating. If the amount of component (C) is too high, emulsion stability is reduced.

[Component (D)]

Component (D) of the present invention is a surfactant and can be used alone or in combination of two or more. Examples of the surfactant include, but are not limited to, nonionic surfactants, anionic surfactants, cationic surfactants, and amphoteric surfactants.

Examples of nonionic surfactants include polyoxyethylene alkyl ether, polyoxyethylene polyoxypropylene alkyl ether, polyoxyethylene alkylphenyl ether, polyethylene glycol fatty acid ester, sorbitan fatty acid ester, polyoxyethylene sorbitan fatty acid ester, polyoxyethylene sorbitol fatty acid ester, glycerol fatty acid ester, polyoxyethylene glycerol fatty acid ester, polyglycerol fatty acid ester, propylene glycol fatty acid ester, polyoxyethylene castor oil, polyoxyethylene hydrogenated castor oil, polyoxyethylene hydrogenated castor oil fatty acid ester, polyoxyethylene alkylamine, polyoxyethylene fatty acid amide, polyoxyethylene-modified organopolysiloxane, and polyoxyethylene polyoxypropylene-modified organopolysiloxane.

Examples of anionic surfactants include alkyl sulfate ester salts, such as sodium lauryl sulfate, polyoxyethylene alkyl ether sulfate salts, polyoxyethylene alkyl phenyl ether sulfate salts, alkyl benzene sulfonate salts, polyoxyethylene alkyl phenyl ether sulfonate salts, alkyl diphenyl ether disulfonate salts, alkanesulfonate salts, N-acyltaurate salts, dialkyl sulfosuccinate salts, monoalkyl sulfosuccinate salts, polyoxyethylene alkyl ether sulfosuccinate salts, fatty acid salts, polyoxyethylene alkyl ether carboxylate salts, N-acyl amino acid salts, monoalkyl phosphate salts, dialkyl phosphate salts, and polyoxyethylene alkyl ether phosphate salts.

Examples of cationic surfactants include alkyl trimethyl ammonium salts, dialkyl dimethyl ammonium salts, polyoxyethylene alkyl dimethyl ammonium salts, dipolyoxyethylene alkyl methyl ammonium salts, tripolyoxyethylene alkyl ammonium salts, alkyl benzyl dimethyl ammonium salts, alkyl pyridinium salts, monoalkylamine salts, and monoalkylamidoamine salts.

Examples of amphoteric surfactants include alkyl dimethylamine oxide, alkyl dimethyl carboxybetaine, alkyl amidopropyl dimethyl carboxybetaine, alkyl hydroxysulfobetaine, and alkyl carboxymethyl hydroxyethyl imidazolinium betaine.

Component (D) is preferably a nonionic surfactant, more preferably a polyoxyethylene alkyl ether or a polyoxyethylene polyoxypropylene alkyl ether. In particular, poly(oxyethylene) secondary alkyl ether formed by adding an EO chain to the hydroxyl group of a linear secondary alcohol is preferred.

The nonionic surfactant serving as component (D) preferably has an HLB value of 9.0 to 17.0, more preferably 11.0 to 16.0, even more preferably 12.0 to 15.0.

The amount of component (D) is 3 to 50 parts by weight, preferably 5 to 30 parts by weight, more preferably 6 to 15 parts by weight, even more preferably 7 to 10 parts by weight per 100 parts by weight of component (A). If the amount of component (D) is too low, cissing tends to occur after coating. If the amount of component (D) is too high, the composition exhibits low stability when blended into paints.

[Component (E)]

The composition of the present invention contains (E) water. The amount of water is 10 to 2,000 parts by weight, preferably 30 to 1,000 parts by weight per 100 parts by weight of component (A).

[Organic Acid (F)]

Component (F) is an organic acid and can be used alone or in combination of two or more. Specific examples include monocarboxylic acids, dicarboxylic acids, hydroxycarboxylic acids, aromatic carboxylic acids, and acidic amino acids. More specific examples include monocarboxylic acids, such as acetic acid, propionic acid and caprylic acid;

dicarboxylic acids, such as malonic acid, succinic acid, glutaric acid, adipic acid, maleic acid, and fumaric acid; hydroxycarboxylic acids, such as glycolic acid, lactic acid, hydroxyacrylic acid, glyceric acid, malic acid, tartaric acid, and citric acid; aromatic carboxylic acids selected from benzoic acid, salicylic acid and phthalic acid; acidic amino acids, such as glutamic acid and aspartic acid.

The amount of component (F) when blended is 0.05 to 5 parts by weight, preferably 0.1 to 3 parts by weight, more preferably 0.2 to 1 part by weight per 100 parts by weight of component (A).

For the composition of the present invention, the emulsion particles preferably have an average particle size of up to 450 nm, more preferably up to 400 nm, even more preferably up to 350 nm to improve emulsion stability and prevent or reduce emulsion separation. If the average particle size is larger than 450 nm, low emulsion stability may lead to rapid separation. The lower limit of the average particle size can be, for example, 80 nm, without limitation. The average particle size of the emulsion particles in the present invention is the particle size at 50% of the cumulative volume in the particle size distribution obtained by the laser diffraction/scattering method. Any device using the laser diffraction/scattering method can be used, such as LA960 available from HORIBA, Ltd.

The composition of the present invention preferably satisfies a [(Bw) + (Dw)]/(Aw) of 0.05 to 0.25, where (Aw) is the amount of the amino-modified silicone (A), (Bw) is the amount of the polyether-modified silicone (B), and (Dw) is the amount of the surfactant (D). [(Bw) + (Dw)]/(Aw) is preferably 0.07 to 0.20, more preferably 0.08 to 0.15. When [(Bw) + (Dw)]/(Aw) is at least 0.05, the emulsion has higher stability. When [(Bw) + (Dw)]/(Aw) is up to 0.25, the emulsion exhibits higher stability when blended into paints. Note that w represents the weight.

The composition of the present invention preferably satisfies a (Aae)/[(Bw) + (Dw)] of at least 1,000, more preferably at least 1,200, even more preferably at least 1,600, where (Aae) is the amino group equivalent of the amino-modified silicone (A), (Bw) is the amount of the polyether-modified silicone (B), and (Dw) is the amount of the surfactant (D). When (Aae)/[(Bw) + (Dw)] is at least 1,000, the composition exhibits higher stability when blended into paints. Although the upper limit is not limited, (Aae)/[(Bw) + (Dw)] can be up to 4,000, preferably up to 3,000. Note that w represents the weight.

The composition of the present invention preferably has a pH at 25°C of 3.5 to 7.5, more preferably 3.7 to 7.0, even more preferably 4.0 to 6.5. The pH in the present invention is obtained by measuring the emulsion at 25°C using a pH meter (LAQUA available from HORIBA, Ltd).

[Production Method]

The composition of the present invention can be prepared by, for example, mixing component (E) with components (A), (B), (C), and (D) to form an emulsion dispersion in accordance with a standard method. In particular, an oil-in-water (O/W) emulsion is preferred. The emulsion can be diluted by further adding water and used in the applications described below. The amount of water used for dilution is not limited and is adjusted according to the applications.

One of methods for preparing an emulsion containing an amino-modified silicone is an emulsion polymerization method, in which the raw materials of the amino-modified silicone are emulsified and dispersed in water using a surfactant, and then a catalyst is added to cause polymerization in the emulsion. In the present invention, however, the emulsion composition is preferably prepared as follows: component (A) is obtained by subjecting, to an equilibrium reaction, a cyclic siloxane, such as octamethylcyclotetrasiloxane; 3-aminopropyldiethoxymethylsilane, N-(2-aminoethyl)-3-aminopropyl dimethoxymethylsilane, or their hydrolysate; and another raw material, such as a compound selected from, for example, hexamethyldisiloxane and dimethyl silicone represented by formula (2) above, component (A) is then mixed with components (B), (C), and (D), and optional component (F), and the resulting mixture is emulsified and dispersed in water in accordance with a standard method.

An example of the details of the emulsion formulation is as described below. For example, the amino-modified silicone serving as component (A), the polyether-modified silicone serving as component (B), organic solvent (C), surfactant (D), and part of water serving as component (E) are blended in a mixing device COMBI MIX (available from PRIMIX Corporation), and then emulsified at 500 to 5,000 rpm using a homogenizing mixer (a stirrer using rotation of a rotor in a stator) or at 500 to 5,000 rpm using a disperser (a stirrer using rotation of a toothed blade), and an anchor stirrer at 5 to 50 rpm. After the entire emulsification is complete, the emulsion is stirred with a disperser at 500 to 5,000 rpm and an anchor stirrer at 5 to 50 rpm for 15 to 180 minutes until the particles reach a predetermined particle size, and the emulsion is then diluted with the remaining water serving as component (E) at 2,000 to 3,000 rpm using a homogenizing mixer to prepare the amino-modified silicone emulsion of the present invention.

The emulsification temperature is preferably, but not necessarily, 0°C to 80°C, more preferably 10°C to 60°C. At a temperature of 10°C to 60°C, emulsification easily occurs, and the produced emulsion tends to be more stable. Since heating the amino-modified silicone emulsion at 70°C to 80°C for 1 to 30 hours may reduce the particle size or viscosity, the production of the amino-modified silicone emulsion may include a heating process at 70°C to 80°C depending on a desired particle size and viscosity. During emulsification, the pressure may be atmospheric pressure or may be reduced or increased. Emulsification under reduced or increased pressure may minimize bubble incorporation, resulting in effective

emulsification. The pressure when reduced is preferably higher than the vapor pressure of the raw materials to prevent or reduce volatilization of the raw materials. The emulsification time is not specified but may be the time required to obtain a desired particle size. In general, the emulsification time is appropriately set between 30 to 360 minutes.

Any emulsifier can be used for emulsification as long as the emulsifier is capable of stirring the raw materials and the emulsified composition. Examples of emulsifiers that can be used include colloid mills with a stirring section composed of a rotor and a stator (IKA-Works, Inc., PUC Probst & Class, NISSEI Corporation., IWAKI CO., LTD.), high shear mixers (Silverson Machines, Inc., PRIMIX Corporation), HOMOGENIZING MIXER (PRIMIX Corporation), HOMOGENIZING DISPER (PRIMIX Corporation), AGI HOMO MIXER (PRIMIX Corporation), COMBI MIX (PRIMIX Corporation), which is a three-shaft dispersion kneader composed of HOMOGENIZING MIXER, HOMOGENIZING DISPER, and ANCHOR MIXER; HAAKE Mini LabII (Thermo scientific), which is a twin-shaft mixer with co- or counter-rotating twin screws; and MC15 and MC5 (Leo-Lab).

In addition to components (A) to (F), the composition of the present invention may contain appropriate amounts of various optional components as needed, unless these components impair the object of the present invention. Examples of these optional components include silicone components other than components (A) and (B), and additives.

Examples of silicone components other than components (A) and (B) include silicone oils, such as dimethyl silicone oil, methyl hydrogen silicone oil, methyl phenyl silicone oil, and alkyl-modified silicone oil. When silicone components other than components (A) and (B) are blended, the amount of the silicone components is preferably 0.5 to 10 parts by weight per 100 parts by weight of component (A).

Specific examples of additives include protective colloids, thickeners, antifreezes, preservatives, rust inhibitors, antioxidants, flavors, UV absorbers, antibacterial agents, curing catalysts, organic powders, inorganic powders, dyes, and fillers. These additives can be used alone or in combination of two or more. The desired effects can be obtained without fluorine. The amount of these additives when added is preferably 0.01 to 5 parts by weight, more preferably 0.05 to 1 part by weight per 100 parts by weight of component (A).

[Paint Additive and Paint]

The amino-modified silicone emulsion of the present invention is also useful as a paint additive. For example, the amino-modified silicone emulsion can be preferably blended into a paint in an amount of 0.1% to 30% by weight, more preferably 0.5% to 20% by weight. When the amount is at least the lower limit mentioned above, the amino-modified silicone emulsion can impart leveling properties to a paint. If the amount is up to the above upper limit, the leveling effect is small, and appearance defects may occur after coating. A paint containing the above amino-modified silicone emulsion can also be provided.

## EXAMPLES

Examples and Comparative Examples are given below for further illustrating the present invention although the present invention is not limited thereto. When the name of a blended product is specified, the amount blended refers to the amount of the blended product.

The measurement methods are described below.

Average particle size: a value (at 50% of the cumulative volume in the particle size distribution) obtained by diluting the amino-modified silicone emulsion about tenfold with water and measuring the diluted emulsion using a laser diffraction particle size analyzer (LA960 available from HORIBA, Ltd).

pH: a value obtained by measuring the amino-modified silicone emulsion at 25°C using a pH meter (LAQUA available from HORIBA, Ltd).

Viscosity: a value measured at 25°C by using a BM-type viscometer (e.g., available from Tokyo Keiki Inc).

Amino group equivalent: a value measured by the following method using an automatic titrator (available from HIRANUMA Co., Ltd).

The target amino-modified silicone is dissolved in a solvent mixture of toluene and IPA at a weight ratio of 1:1, and the amino group equivalent is measured by titrating the resulting solution with hydrochloric acid using an automatic titrator until the endpoint at pH = 7. The amino group equivalent is calculated as the molecular weight of silicone per mole of amino groups using the following formula.

$$\text{Amino group equivalent (g/mol)} = \{([\text{sample weight (g)}] \times 1{,}000)\}/\{[\text{normality of hydrochloric acid (N)}] \times [\text{titration volume of hydrochloric acid (mL)}] \times [\text{titer of hydrochloric acid (F)}]\}$$

The following components were used.

Amino-modified silicone (A)

Amino-modified silicones (A) represented by the following average compositional formulas

(A-1)

[Chem. 6]

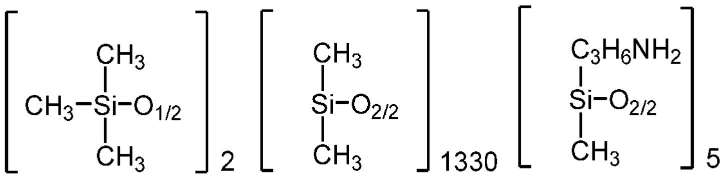

viscosity: 74,000 mPa·s, amino group equivalent: 20,000 g/mol
(A-2)

[Chem. 7]

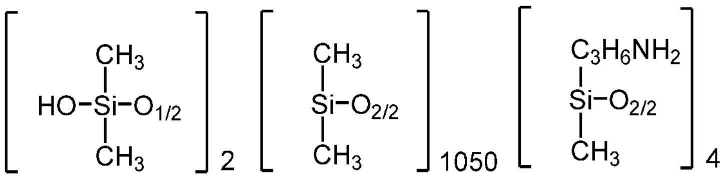

viscosity: 32,000 mPa·s, amino group equivalent: 19,000 g/mol
(A-3)

[Chem. 8]

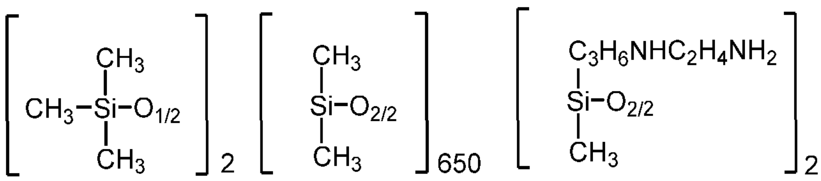

viscosity: 5,000 mPa·s, amino group equivalent: 12,000 g/mol

Polyether-modified silicone (B)

Polyether-modified silicones represented by the following average compositional formulas

(B-1)

[Chem. 9]

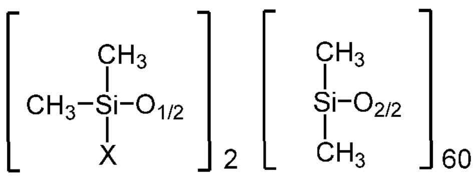

(B-1)

$X=C_3H_6O(C_2H_4O)_{23}(C_3H_6O)_{23}C_4H_9$

viscosity: 15,000 mPa·s
HLB: 5.8

(B-2)

[Chem. 10]

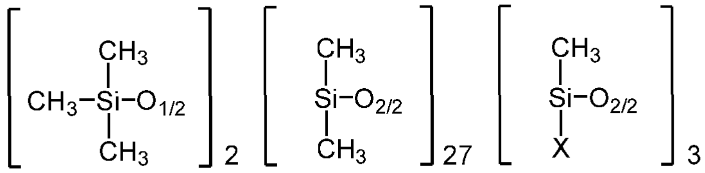

(B-2)

$X=C_3H_6O(C_2H_4O)_{23}(C_3H_6O)_{23}C_4H_9$

viscosity: 1,600 mPa·s
HLB: 6.2

(B-3)

[Chem. 11]

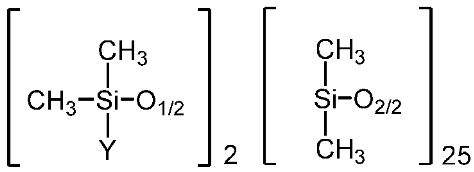

(B-3)

$Y=C_3H_6O(C_2H_4O)_{24}(C_3H_6O)_6CH_3$

viscosity: 1,300 mPa·s
HLB: 9.5

Component (C)

(C-1): Ethylene glycol, SP value: 14.2

(C-2): 1,3-Butylene glycol, SP value: 14.2

(C-3): Butyl acetate, SP value: 8.5, comparative product

Surfactant (D)

(D-1): Poly(oxyethylene) secondary alkyl ether [Softanol 90 (product name): Nippon Shokubai Co., Ltd.], HLB value 13.3

(D-2): Polyoxyethylene tridecyl ether [Newcol 1310 (product name): Nippon Nyukazai Co., Ltd.], HLB value 13.7

Organic Acid (F)

(F-1): Acetic acid

[Example 1]

One hundred parts by weight of amino-modified silicone (A-1), 2.78 parts by weight of polyether-modified silicone (B-1), 5.56 parts by weight of ethylene glycol (C-1), 10.56 parts by weight of Softanol 90 (D-1), 158.58 parts by weight of ion exchanged water (E), and 0.31 parts by weight of acetic acid (F-1) were mixed using a homogenizing mixer and emulsified into a dispersion to obtain an amino-modified silicone emulsion composition (I-1). The average particle size and pH of the emulsion particles were 310 nm and 4.4, respectively.

[Example 2]

One hundred parts by weight of amino-modified silicone (A-2), 2.78 parts by weight of polyether-modified silicone (B-1), 5.56 parts by weight of ethylene glycol (C-1), 10.56 parts by weight of poly(oxyethylene) secondary alkyl ether (D-1), 158.58 parts by weight of ion exchanged water (E), and 0.31 parts by weight of acetic acid (F-1) were mixed using a homogenizing mixer and emulsified into a dispersion to obtain an amino-modified silicone emulsion composition (I-2). The average particle size and pH of the emulsion particles were 320 nm and 4.7, respectively.

[Example 3]

One hundred parts by weight of amino-modified silicone (A-1), 1.11 parts by weight of polyether-modified silicone (B-3), 6.11 parts by weight of ethylene glycol (C-1), 9.17 parts by weight of poly(oxyethylene) secondary alkyl ether (D-1), 161.08 parts by weight of ion exchanged water (E), and 0.31 parts by weight of acetic acid (F-1) were mixed using a homogenizing mixer and emulsified into a dispersion to obtain an amino-modified silicone emulsion composition (I-3). The average particle size and pH of the emulsion particles were 300 nm and 4.5, respectively.

[Example 4]

One hundred parts by weight of amino-modified silicone (A-1), 0.97 parts by weight of polyether-modified silicone (B-2), 5.56 parts by weight of ethylene glycol (C-1), 8.33 parts by weight of poly(oxyethylene) secondary alkyl ether (D-1), 162.53 parts by weight of ion exchanged water (E), and 0.39 parts by weight of acetic acid (F-1) were mixed using a homogenizing mixer and emulsified into a dispersion to obtain an amino-modified silicone emulsion composition (I-4). The average particle size and pH of the emulsion particles were 300 nm and 4.3, respectively.

[Example 5]

One hundred parts by weight of amino-modified silicone (A-1), 1.39 parts by weight of polyether-modified silicone (B-2), 5.56 parts by weight of 1,3-butylene glycol (C-2), 9.17 parts by weight of poly(oxyethylene) secondary alkyl ether (D-1), 161.36 parts by weight of ion exchanged water (E), and 0.31 parts by weight of acetic acid (F-1) were mixed using a homogenizing mixer and emulsified into a dispersion to obtain an amino-modified silicone emulsion composition (I-5). The average particle size and pH of the emulsion particles were 290 nm and 4.4, respectively.

[Example 6]

One hundred parts by weight of amino-modified silicone (A-3), 2.80 parts by weight of polyether-modified silicone (B-2), 5.56 parts by weight of ethylene glycol (C-1), 10.00 parts by weight of poly(oxyethylene) secondary alkyl ether (D-1), 161.36 parts by weight of ion exchanged water (E), and 0.50 parts by weight of acetic acid (F-1) were mixed using a homogenizing mixer and emulsified into a dispersion to obtain an amino-modified silicone emulsion composition (I-6). The average particle size and pH of the emulsion particles were 320 nm and 4.3, respectively.

[Example 7]

One hundred parts by weight of amino-modified silicone (A-3), 0.95 parts by weight of polyether-modified silicone (B-2), 5.56 parts by weight of ethylene glycol (C-1), 3.50 parts by weight of poly(oxyethylene) secondary alkyl ether (D-1), 161.36 parts by weight of ion exchanged water (E), and 0.50 parts by weight of acetic acid (F-1) were mixed using a homogenizing mixer and emulsified into a dispersion to obtain an amino-modified silicone emulsion composition (I-7). The average particle size and pH of the emulsion particles were 320 nm and 4.4, respectively.

[Comparative Example 1]

One hundred parts by weight of amino-modified silicone (A-2), 18.67 parts by weight of polyoxyethylene tridecyl ether (D-2), 214.33 parts by weight of ion exchanged water (E), and 0.33 parts by weight of acetic acid (F-1) were mixed using a homogenizing mixer and emulsified into a dispersion to obtain an amino-modified silicone emulsion composition (II-1). The average particle size and pH of the emulsion particles were 270 nm and 4.9, respectively.

[Comparative Example 2]

One hundred parts by weight of amino-modified silicone (A-1), 5.56 parts by weight of ethylene glycol (C-1), 10.56 parts by weight of poly(oxyethylene) secondary alkyl ether (D-1), 161.36 parts by weight of ion exchanged water (E), and 0.31 parts by weight of acetic acid (F-1) were mixed using a homogenizing mixer and emulsified into a dispersion to obtain an amino-modified silicone emulsion composition (II-2). The average particle size and pH of the emulsion particles were 330 nm and 4.5, respectively.

[Comparative Example 3]

One hundred parts by weight of amino-modified silicone (A-3), 5.56 parts by weight of ethylene glycol (C-1), 10.56 parts by weight of poly(oxyethylene) secondary alkyl ether (D-1), 161.17 parts by weight of ion exchanged water (E), and 0.50 parts by weight of acetic acid (F-1) were mixed using a homogenizing mixer and emulsified into a dispersion to obtain an amino-modified silicone emulsion composition (II-3). The average particle size and pH of the emulsion particles were 330 nm and 4.7, respectively.

[Comparative Example 4]

One hundred parts by weight of amino-modified silicone (A-1), 15.28 parts by weight of polyether-modified silicone (B-1), 5.56 parts by weight of ethylene glycol (C-1), 10.56 parts by weight of poly(oxyethylene) secondary alkyl ether (D-1), 146.08 parts by weight of ion exchanged water (E), and 0.31 parts by weight of acetic acid (F-1) were mixed using a homogenizing mixer and emulsified into a dispersion to obtain an amino-modified silicone emulsion composition (II-4). The average particle size and pH of the emulsion particles were 310 nm and 4.3, respectively.

[Comparative Example 5]

One hundred parts by weight of amino-modified silicone (A-2), 15.28 parts by weight of polyether-modified silicone (B-1), 5.56 parts by weight of ethylene glycol (C-1), 10.56 parts by weight of poly(oxyethylene) secondary alkyl ether (D-1), 146.08 parts by weight of ion exchanged water (E), and 0.31 parts by weight of acetic acid (F-1) were mixed using a homogenizing mixer and emulsified into a dispersion to obtain an amino-modified silicone emulsion composition (II-5). The average particle size and pH of the emulsion particles were 300 nm and 4.4, respectively.

[Comparative Example 6]

One hundred parts by weight of amino-modified silicone (A-1), 15.23 parts by weight of polyether-modified silicone (B-2), 5.56 parts by weight of ethylene glycol (C-1), 4.76 parts by weight of poly(oxyethylene) secondary alkyl ether (D-1), 163.33 parts by weight of ion exchanged water (E), and 0.31 parts by weight of acetic acid (F-1) were mixed using a homogenizing mixer and emulsified into a dispersion to obtain an amino-modified silicone emulsion composition (II-6). The average particle size and pH of the emulsion particles were 320 nm and 4.3, respectively.

[Comparative Example 7]

One hundred parts by weight of amino-modified silicone (A-1), 1.39 parts by weight of polyether-modified silicone (B-2), 5.56 parts by weight of butyl acetate (C-3), 9.17 parts by weight of poly(oxyethylene) secondary alkyl ether (D-1), 161.36 parts by weight of ion exchanged water (E), and 0.31 parts by weight of acetic acid (F-1) were mixed using a homogenizing mixer and emulsified into a dispersion to obtain an amino-modified silicone emulsion composition (II-7). The average particle size and pH of the emulsion particles were 300 nm and 4.4, respectively.

The obtained silicone emulsion compositions were evaluated for "emulsion stability," "cloudiness after coating," "cissing after coating," and "stability when blended into paints" by the following methods. The results are described in Tables.

[Emulsion Stability]

After 100 g of each of the emulsions obtained in Examples and Comparative Examples was placed in a glass bottle and allowed to stand at 40°C for one month, the nonvolatile contents (105°C, 3 hours) of the upper layer and the lower layer were measured. As the ratio of the nonvolatile content of the upper layer to the nonvolatile content of the lower layer approaches 1, separation is less likely to occur and stability increases. As the ratio deviates from 1, separation is more likely to occur, and stability decreases.

[Appearance After Coating]

Ten grams of the main component of a water-based high-durability two-component urethane varnish, transparent, "Clear" (product name, Asahipen Corporation) was mixed with 0.2 g of each of the amino-modified silicone emulsion compositions obtained in Examples and Comparative Examples. Two grams of the curing agent of the water-based high-durability two-component urethane varnish, transparent, "Clear" (product name, Asahipen Corporation) was further added and mixed to prepare a paint liquid for evaluation.
The prepared paint liquid for evaluation was applied to a surface-uncoated paperboard (15 cm × 7 cm) using a bar coater No. 20 and then dried at 25°C for 3 hours. After drying, the condition of each coating film was visually observed. Samples with a transparent coating film were rated "○", and those with a cloudy coating film were rated "×".

[Cissing After Coating]

Ten grams of the main component of a water-based high-durability two-component urethane varnish, transparent, "Clear" (product name, Asahipen Corporation) was mixed with 0.2 g of each of the amino-modified silicone emulsion compositions obtained in Examples and Comparative Examples. Two grams of the curing agent of the water-based high-durability two-component urethane varnish, transparent, "Clear" (product name, Asahipen Corporation) was further added and mixed to prepare a paint liquid for evaluation.
The prepared paint liquid for evaluation was applied to a surface-uncoated paperboard (15 cm × 7 cm) using a bar coater No. 20 and then dried at 25°C for 3 hours.
After drying, the condition of each coating film was visually observed. Samples with no cissing were rated "◎", those with cissing on part of the coated surface were rated "○", and those with cissing on the entire coated surface were rated "×".

[Stability When Blended Into Paints]

Ten grams of the main component of a water-based high-durability two-component urethane varnish, transparent, "Clear" (product name, Asahipen Corporation) was mixed with 1.0 g of each of the amino-modified silicone emulsion compositions obtained in Examples and Comparative Examples. After mixing, the mixture was stored at 25°C, and the viscosity of the mixture was measured after 24 hours. The mixtures with a viscosity of up to 1.1 times the viscosity of the main agent alone of the water-based high-durability two-component urethane varnish, transparent, "Clear" (product name, Asahipen Corporation) were rated "◎", those with a viscosity in the range of more than 1.1 times and up to 2.0 times the viscosity of the main agent alone were rated "○", and those with a viscosity that exceeds 2.0 times the viscosity of the main agent alone were rated "×".

[Table 1]

| Composition (parts by weight) | | Example | | | | | | |
|---|---|---|---|---|---|---|---|---|
| | | 1 | 2 | 3 | 4 | 5 | 6 | 7 |
| (A) | (A-1) | 100 | | 100 | 100 | 100 | | |
| | (A-2) | | 100 | | | | | |
| | (A-3) | | | | | | 100 | 100 |
| (B) | (B-1) | 2.78 | 2.78 | | | | | |
| | (B-2) | | | | 0.97 | 1.39 | 2.80 | 0.95 |
| | (B-3) | | | 1.11 | | | | |
| (C) | (C-1) | 5.56 | 5.56 | 6.11 | 5.56 | | 5.56 | 5.56 |
| | (C-2) | | | | | 5.56 | | |

(continued)

| Composition (parts by weight) | | Example | | | | | | |
|---|---|---|---|---|---|---|---|---|
| | | 1 | 2 | 3 | 4 | 5 | 6 | 7 |
| (D) | (D-1) | 10.56 | 10.56 | 9.17 | 8.33 | 9.17 | 10.00 | 3.50 |
| | (D-2) | | | | | | | |
| (E) | (E-1) | 158.58 | 158.58 | 161.08 | 162.53 | 161.36 | 161.36 | 161.36 |
| (F) | (F-1) | 0.31 | 0.31 | 0.31 | 0.39 | 0.31 | 0.50 | 0.50 |
| [(Bw) + (Dw)]/(Aw) | | 0.13 | 0.13 | 0.10 | 0.09 | 0.11 | 0.13 | 0.04 |
| (Aae)/[(B) + (D)] | | 1,500 | 1,425 | 1,946 | 2,149 | 1,895 | 938 | 2,697 |
| Average particle size of emulsion particles (nm) | | 310 | 320 | 300 | 300 | 290 | 320 | 320 |
| pH | | 4.4 | 4.7 | 4.5 | 4.3 | 4.4 | 4.3 | 4.4 |
| Emulsion stability | | 0.98 | 0.98 | 0.99 | 1.00 | 1.00 | 1.02 | 1.04 |
| Appearance after coating | | ○ | ○ | ○ | ○ | ○ | ○ | ○ |
| Cissing after coating | | ◎ | ◎ | ◎ | ◎ | ◎ | ○ | ○ |
| Stability when blended into paints | | ○ | ○ | ◎ | ◎ | ◎ | ○ | ◎ |

[Table 2]

| Composition (parts by weight) | | Comparative Example | | | | | | |
|---|---|---|---|---|---|---|---|---|
| | | 1 | 2 | 3 | 4 | 5 | 6 | 7 |
| (A) | (A-1) | | 100 | | 100 | | 100 | 100 |
| | (A-2) | 100 | | | | 100 | | |
| | (A-3) | | | 100 | | | | |
| (B) | (B-1) | | | | 15.28 | 15.28 | | |
| | (B-2) | | | | | | 15.23 | 1.29 |
| | (B-3) | | | | | | | |
| (C) | (C-1) | | 5.56 | 5.56 | 5.56 | 5.56 | 5.56 | |
| | (C-2) | | | | | | | |
| | (C-3) | | | | | | | 5.56 |
| (D) | (D-1) | | 10.56 | 10.56 | 10.56 | 10.56 | 4.76 | 9.17 |
| | (D-2) | 18.67 | | | | | | |
| (E) | (E-1) | 214.33 | 161.36 | 161.17 | 146.08 | 146.08 | 163.33 | 161.36 |
| (F) | (F-1) | 0.33 | 0.31 | 0.50 | 0.31 | 0.31 | 0.31 | 0.31 |
| [(Bw) + (Dw)]/(Aw) | | 0.19 | 0.11 | 0.11 | 0.26 | 0.26 | 0.20 | 0.11 |
| (Aae)/[(B) + (D)] | | 1,018 | 1,895 | 1,137 | 774 | 735 | 1,001 | 1,894 |
| Average particle size of emulsion particles (nm) | | 270 | 330 | 330 | 310 | 300 | 320 | 300 |
| pH | | 4.9 | 4.5 | 4.7 | 4.3 | 4.4 | 4.3 | 4.4 |
| Emulsion stability | | 1.00 | 0.99 | 1.01 | 1.00 | 1.00 | 1.02 | 1.04 |
| Appearance after coating | | × | ○ | ○ | ○ | ○ | ○ | × |
| Cissing after coating | | × | × | × | ◎ | ◎ | ◎ | ◎ |
| Stability when blended into paints | | ○ | ◎ | ○ | × | × | × | × |

The above results revel that the amino-modified silicone emulsion of the present invention ensures a good coating appearance and prevents cissing when blended into paints. The amino-modified silicone emulsion maintains high stability even after blended into paints.

INDUSTRIAL APPLICABILITY

The amino-modified silicone emulsion of the present invention ensures a good coating appearance and prevents cissing when blended into paints. The amino-modified silicone emulsion maintains high stability even after blended into paints. The amino-modified silicone emulsion is suitably used as a paint additive.

## Claims

**1.** An amino-modified silicone emulsion composition comprising:

(A) 100 parts by weight of an amino-modified silicone having a viscosity at 25°C of 3,000 to 150,000 mPa·s and an amino group equivalent of 5,000 to 30,000 g/mol and represented by average compositional formula (I) below,

[Chem. 1]

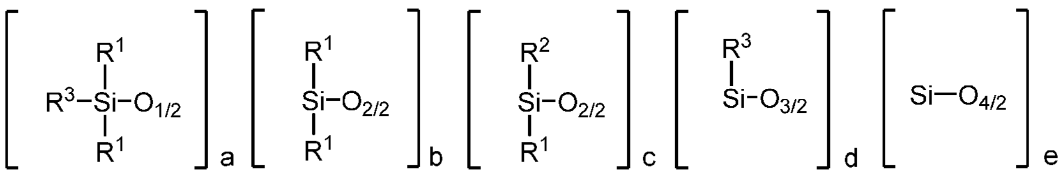

(I)

wherein $R^1$ is each independently a $C_1$-$C_{20}$ unsubstituted monovalent hydrocarbon group,
$R^2$ is each independently a group represented by general formula (1),

$$-R^4-(NH-R^5)_p-NH_2 \qquad (1)$$

$R^4$ and $R^5$ are each independently a $C_1$-$C_6$ divalent organic group, and p is 0 or 1,
$R^3$ is each independently a group selected from $R^1$, $R^2$, -OH, $-OCH_3$, and $-OC_2H_5$, and a, b, c, d, and e are numbers that satisfy ranges of $2 \leq a \leq 10$, $100 \leq b \leq 2{,}000$, $0 \leq c \leq 50$, $0 \leq d \leq 5$, and $0 \leq e \leq 5$, and if c = 0, $R^3$ is $R^2$;

(B) 0.5 to 15.0 parts by weight of a polyether-modified silicone having a viscosity at 25°C of 10 to 25,000 mPa·s and represented by average compositional formula (II) below,

[Chem. 2]

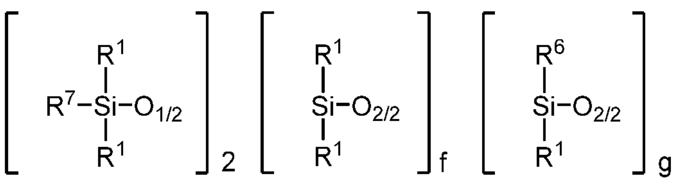

(II)

wherein $R^1$ is each independently a $C_1$-$C_{20}$ unsubstituted monovalent hydrocarbon group,
$R^6$ is each independently a monovalent organic group represented by general formula (3),

$$-C_hH_{2h}O(C_2H_4O)_i(C_3H_6O)_jR^8 \qquad (3)$$

$R^7$ is a group selected from $R^1$, $R^6$, -OH, $-OCH_3$, and $-OC_2H_5$, $R^8$ is a group selected from a hydrogen atom, a $C_1$-$C_6$ alkyl group, and an acetyl group, h is an integer of 1 to 5, i is a number of 5 to 50, j is a number of 0 to 40, f

and g satisfy $0 \leq f \leq 200$ and $0 \leq g \leq 30$, and if g = 0, $R^7$ is $R^6$;

(C) 1 to 15 parts by weight of an organic solvent having an SP value of 10.0 to 16.0;
(D) 3 to 50 parts by weight of a surfactant; and
(E) 10 to 2,000 parts by weight of water.

**2.** The amino-modified silicone emulsion composition according to claim 1, further comprising (F) 0.05 to 5 parts by weight of an organic acid.

**3.** The amino-modified silicone emulsion composition according to claim 1, wherein emulsion particles have an average particle size of up to 450 nm.

**4.** The amino-modified silicone emulsion composition according to claim 1, wherein the amino-modified silicone emulsion composition satisfies a [(Bw) + (Dw)]/(Aw) of 0.05 to 0.25, where (Aw) is an amount of the amino-modified silicone (A), (Bw) is an amount of the polyether-modified silicone (B), and (Dw) is an amount of the surfactant (D).

**5.** The amino-modified silicone emulsion composition according to claim 1, wherein the amino-modified silicone emulsion composition satisfies a (Aae)/[(Bw) + (Dw)] of at least 1,000, where (Aae) is an amino group equivalent of the amino-modified silicone (A), (Bw) is an amount of the polyether-modified silicone (B), and (Dw) is an amount of the surfactant (D).

**6.** The amino-modified silicone emulsion composition according to claim 1, wherein the amino-modified silicone emulsion composition has a pH of 3.5 to 7.5 at 25°C.

**7.** A paint additive comprising the amino-modified silicone emulsion according to any one of claims 1 to 6.

**8.** A paint comprising the amino-modified silicone emulsion according to any one of claims 1 to 6.

## INTERNATIONAL SEARCH REPORT

International application No.
**PCT/JP2023/039433**

**A. CLASSIFICATION OF SUBJECT MATTER**

***C08L 83/08***(2006.01)i; ***C08K 5/00***(2006.01)i; ***C08L 83/12***(2006.01)i; ***C09D 7/65***(2018.01)i; ***C09D 201/00***(2006.01)i
FI: C08L83/08; C09D201/00; C09D7/65; C08L83/12; C08K5/00

According to International Patent Classification (IPC) or to both national classification and IPC

**B. FIELDS SEARCHED**

Minimum documentation searched (classification system followed by classification symbols)

C08L83/08; C08K5/00; C08L83/12; C09D7/65; C09D201/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2020-172569 A (SHIN ETSU CHEM. CO., LTD.) 22 October 2020 (2020-10-22) | 1-8 |
| A | JP 2018-172491 A (SHIN ETSU CHEM. CO., LTD.) 08 November 2018 (2018-11-08) | 1-8 |
| A | JP 2020-535256 A (EVONIK OPERATIONS GMBH) 03 December 2020 (2020-12-03) | 1-8 |
| A | JP 2013-177495 A (MATSUMOTO YUSHI SEIYAKU CO., LTD.) 09 September 2013 (2013-09-09) | 1-8 |
| A | CN 106800852 A (LI, Aifu) 06 June 2017 (2017-06-06) | 1-8 |
| A | JP 2009-132850 A (SHIN ETSU CHEM. CO., LTD.) 18 June 2009 (2009-06-18) | 1-8 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **20 December 2023** | **16 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/039433**

| Patent document cited in search report | Publication date (day/month/year) | Patent family member(s) | Publication date (day/month/year) |
|---|---|---|---|
| JP 2020-172569 A | 22 October 2020 | WO 2020/208905 A1<br>CN 113661223 A<br>KR 10-2021-0149718 A<br>TW 202104446 A | |
| JP 2018-172491 A | 08 November 2018 | KR 10-2018-0111614 A | |
| JP 2020-535256 A | 03 December 2020 | US 2020/0299616 A1<br>WO 2019/057754 A1<br>EP 3853334 A1<br>CN 111133089 A<br>ES 2939182 T | |
| JP 2013-177495 A | 09 September 2013 | (Family: none) | |
| CN 106800852 A | 06 June 2017 | (Family: none) | |
| JP 2009-132850 A | 18 June 2009 | TW 200936699 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018070683 A
- JP 2013166830 A
- JP 2021080333 A
- WO 20211320571 A